# EUROPÄISCHE PATENTSCHRIFT

(11) **EP 2 964 860 B1**
(45) Veröffentlichungstag und Bekanntmachung des Hinweises auf die Patenterteilung: **04.04.2018**
(21) Anmeldenummer: 14714569.2
(22) Anmeldetag: 21.02.2014
(51) Int. Cl.: E05D 15/40, E05D 15/46, E05F 1/10, E02D 5/80, F03G 1/10

(54) **STELLANTRIEB FÜR EINE MÖBELKLAPPE**
ACTUATOR FOR A FURNITURE FLAP
MÉCANISME DE COMMANDE POUR UNE PORTE DE MEUBLE

(30) Priorität: 04.03.2013 AT 1652013
(43) Veröffentlichungstag der Anmeldung: 13.01.2016
(73) Patentinhaber: Julius Blum GmbH, 6973 Höchst (AT)
(72) Erfinder: FOLIE, Andreas, A-6850 Dornbirn (AT)
(74) Vertreter: Torggler & Hofinger Patentanwälte
(86) Internationale Anmeldenummer: PCT/AT2014/000036
(87) Internationale Veröffentlichungsnummer: WO 2014/134642

(56) Entgegenhaltungen:
- EP-A1- 1 154 109
- WO-A1-2006/005086
- DE-A1- 10 031 403
- US-A- 3 555 590

## Beschreibung

Die vorliegende Erfindung betrifft einen Stellantrieb zum Bewegen einer Klappe eines Möbels mit den Merkmalen des Oberbegriffs des Anspruchs 1 sowie ein Möbel mit einer Klappe und zweier solcher Stellantriebe.

Ein gattungsgemäßer Stellantrieb zum Bewegen einer Klappe eines Möbels ist etwa aus der WO 2012/112997 bekannt beziehungsweise aus der WO 2006/005086 und der DE 100 31 403 A1, die einen ähnlichen solchen Stellantrieb offenbaren.

Da solche Stellantriebe an unterschiedlich großen und somit unterschiedlichen schweren Klappen befestigt werden, um diese zu verschwenken, ist es notwendig, dass die Stellantriebe sowohl in Ihrer Schwenkkraft, als auch bezüglich des zu übertragenden Drehmoments eingestellt werden können. Dazu weisen diese Stellantriebe zum Einen immer eine Federvorrichtung zum Beaufschlagen des Stellarmes mit einem Schwenkmoment in Öffnungsrichtung auf, wobei die Federpakete der Federvorrichtung in ihrer Kraft über eine Einstellvorrichtung eingestellt werden können und zum Anderen weisen die Stellantriebe eine Einstellvorrichtung auf, um das wirkende Schwenkmoment der Federvorrichtung auf den Stellarm des Stellantriebes einzustellen.

Das Einstellen dieser Einstellvorrichtungen gestaltet sich beim Stand der Technik oftmals recht problematisch, da diese Stellantriebe sowohl an linken Korpusseiten als auch an rechten Korpusseiten befestigt werden und daher das Einstellen der Stellantriebe an einer rechten Möbelkorpusseitenwand unterschiedlich verläuft zum Einstellen des Stellantriebes an einer linken Möbelkorpusseitenwand.

Aufgabe der Erfindung ist es, einen komfortableren Stellantrieb zum Bewegen einer Klappe eines Möbels anzugeben, welcher für das Montagepersonal einfacher auf unterschiedliche Klappen einstellbar ist.

Diese Aufgabe wird durch einen Stellantrieb mit den Merkmalen des Anspruchs 1 sowie eines Möbels mit den Merkmalen des Anspruchs 10 gelöst.

Weitere vorteilhafte Ausführungsformen der Erfindung sind in den abhängigen Ansprüchen definiert.

Dadurch, dass das Zahnradgetriebe der Einstellvorrichtung ein zweites Ritzel aufweist, das mit dem selben Tellerrad in Eingriff steht wie das erste Ritzel, wird es ermöglicht, dass für die Montage des Stellantriebes an der linken Möbelkorpusseitenwand ein eigenes Ritzel zur Verstellung zur Verfügung steht und zur Montage an der rechten Möbelkorpusseitenwand ebenfalls ein eigenes Ritzel zur Verfügung steht. Somit kann der Einsteller des Stellantriebes auf bequeme Art und Weise mit einem für jede Möbelkorpusseitenwand eigenen Ritzel die Einstellung vornehmen.

Schutz wird auch begehrt für ein Möbel mit einer Möbelklappe und zwei Stellantrieben nach wenigstens einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:
- Fig.1: eine perspektivische Darstellung eines Möbels mit zwei Stellantrieben an einer Möbelklappe
- Fig. 2: eine aufgebrochene perspektivische Darstellung eines Möbels mit einem Stellantrieb
- Fig. 3: eine Seitenansicht auf einen Stellantrieb
- Fig. 4: der Stellantrieb der Figur 3 mit veränderter Position des Angriffpunktes des Federpaketes am Stellhebel
- Fig. 5: ein Stellantrieb mit ausgeklappten Stellarmen in Seitenansicht
- Fig. 6: der Stellantrieb der Figur 5 mit verändertem Angriffspunkt des Federpakets am Schwenkhebel
- Fig.7: eine perspektivische Darstellung des Schwenkhebels mit Einstellvorrichtung
- Fig.8: eine perspektivische Explosionsdarstellung des Stellhebels mit Einstellvorrichtung
- Fig. 9: eine perspektivische Darstellung der Einstellvorrichtung
- Fig. 10: eine perspektivische Darstellung des Kegelradgetriebes
- Fig. 11: eine perspektivische Darstellung einer Variante eines Stellantriebs
- Fig. 12: ein perspektivisches Detail der Figur 11 mit einer Einstellvorrichtung zur Verstellung der Position des Angriffspunktes eines Federpaketes am Stellhebel
- Fig. 13: ein Schnitt durch den Stellantrieb der Figur 11 mit zwei Einstellvorrichtungen zum Einstellen des Stellantriebs über eine Einstellvorrichtung die Position eines Angriffspunktes des Federpaketes am Stellhebel verändert und die zweite Einstellvorrichtung die Federvorspannung des Federpaketes der Federvorrichtung verstellt

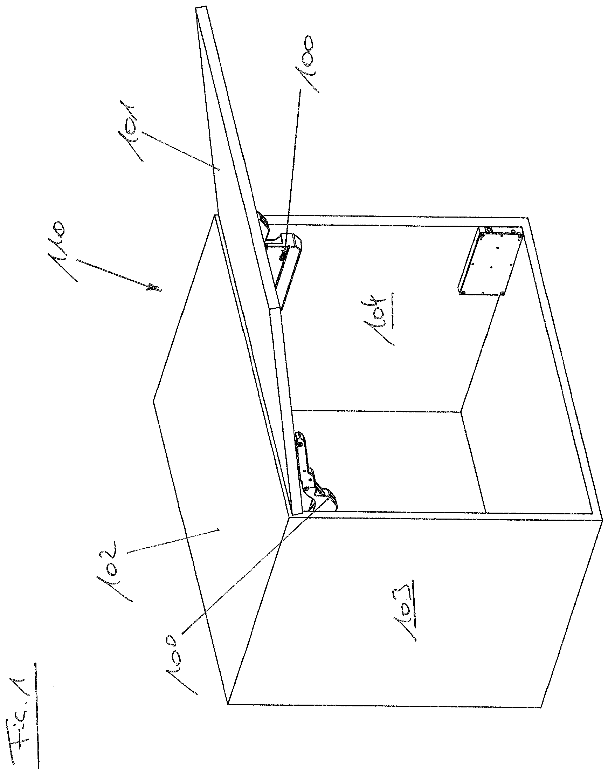

Figur 1 zeigt eine perspektivische Darstellung eines Möbels 110 mit einem Möbelkorpus 102 und einer Möbelklappe 101. Um die Möbelklappe 101 zu verschwenken, sind im Möbelkorpus 102 an dessen Möbelkorpusseitenwänden 103 und 104 zwei Stellantriebe 100 montiert, an denen die Möbelklappe 101 befestigt ist.

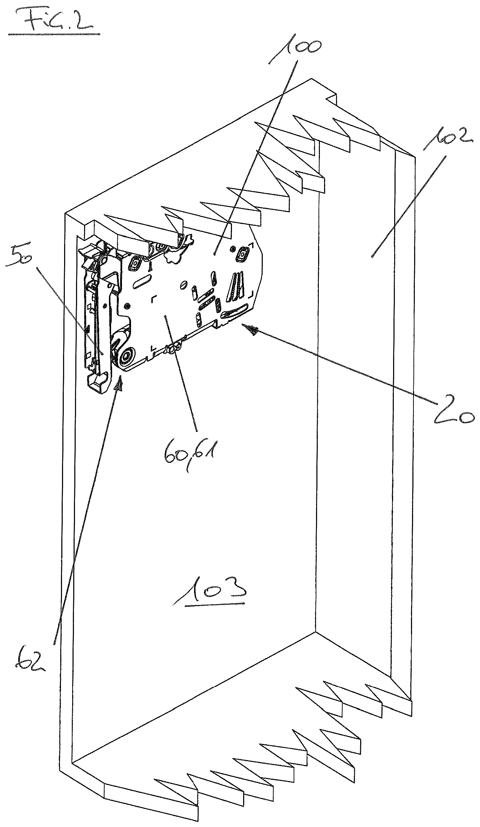

Figur 2 zeigt eine Bruchdarstellung des Möbelkorpus 102 mit Sicht auf die linke Möbelkorpusseitenwand 103. An dieser linken Möbelkorpusseitenwand 103 ist im oberen Bereich der Stellantrieb 100 befestigt. Dabei weist der Stellantrieb 100 ein Gehäuse 60 auf, welches über eine linke Gehäuseseite 61 und eine rechte Gehäuseseite 62 verfügt. Diese beiden Gehäuseseiten 61 und 62 sind im Wesentlichen eben ausgebildet, damit sie gut an der Möbelkorpusseitenwand anliegen können. Die Einstellvorrichtung 20 ist von der linken Gehäuseseite 61 her zugänglich, wenn der Stellantrieb 100 an einer linken Möbelkorpusseitenwand 103 befestigt ist.

Ist der Stellantrieb 100 an einer rechten Möbelkorpusseitenwand 104 befestigt (nicht dargestellt), ist die Einstellvorrichtung 20 von der rechten Gehäuseseite 62 des Gehäuses 60 des Stellantriebs 100 her zugänglich.

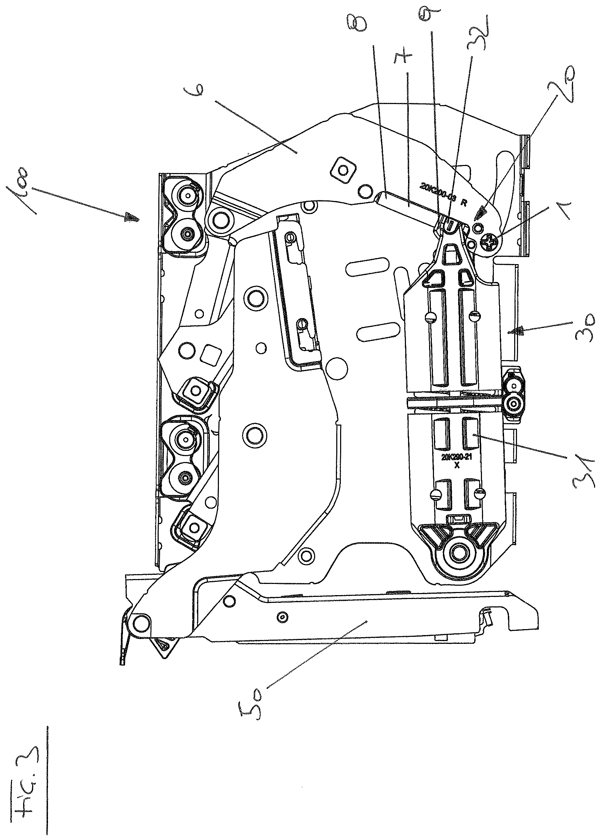

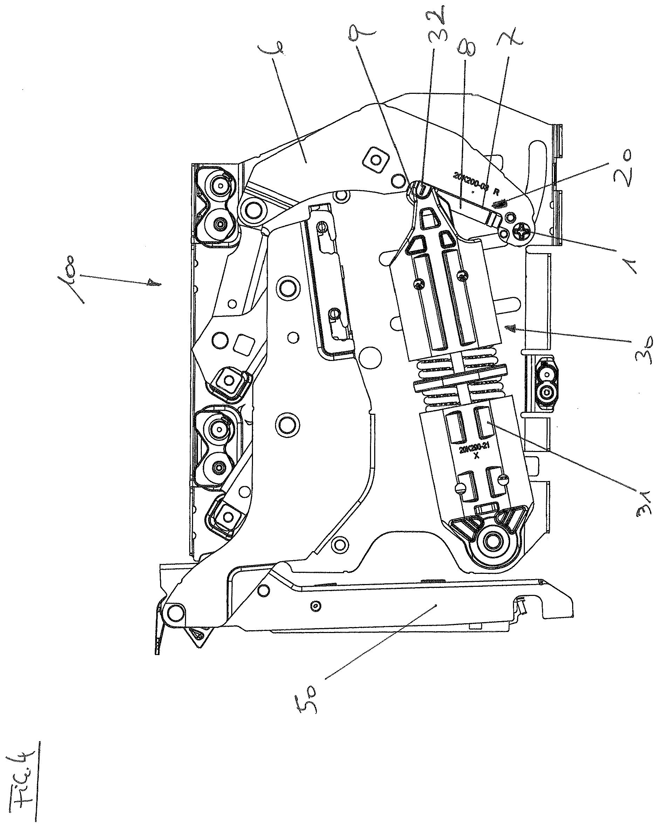

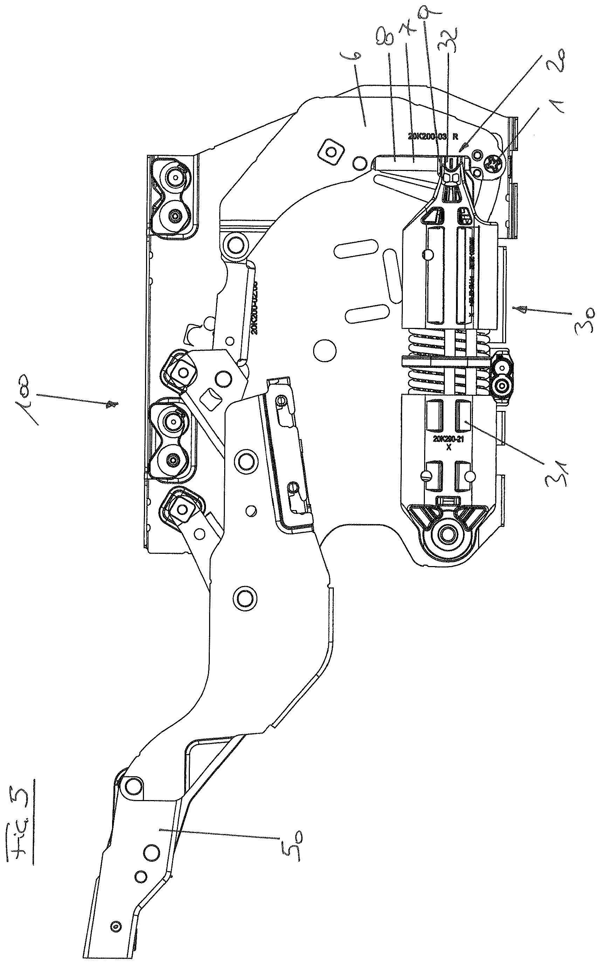

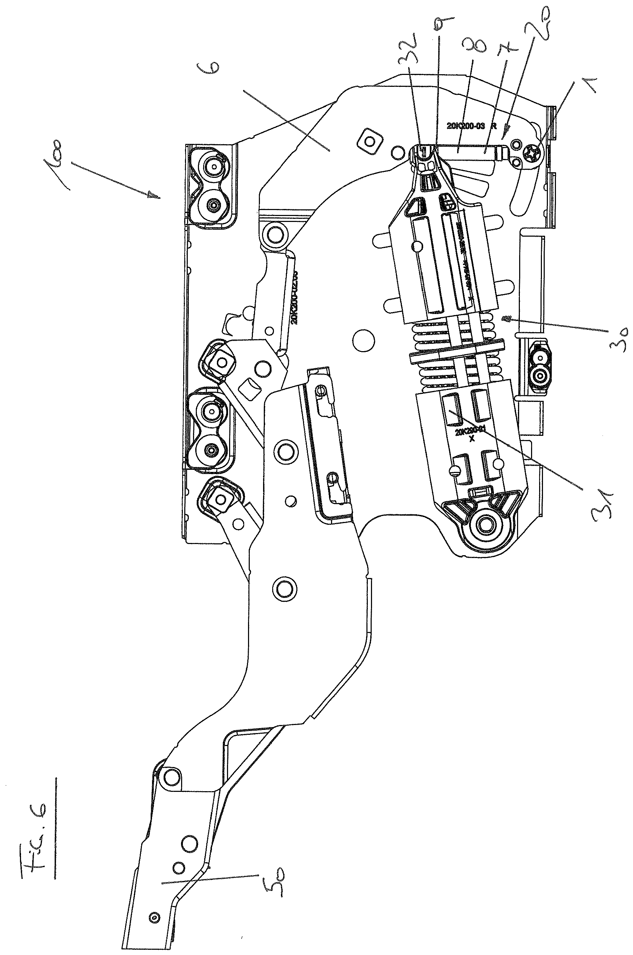

In den Figuren 3 bis 6 ist jeweils in Seitenansicht ein Stellantrieb 100 dargestellt. Bei den Figuren 3 und 4 ist dabei der Stellarm 50 eingeschwenkt, bei den Figuren 5 und 6 ist der Stellarm ausgeschwenkt.

Der Unterschied zwischen den Figuren 3 und 4 sowie zwischen den Figuren 5 und 6 besteht darin, dass dabei jeweils der Angriffspunkt 32 des Federpaketes 31 der Federvorrichtung 30 durch die Einstellvorrichtung 20 verstellt worden ist und sich somit dieser Angriffspunkt 32 bei der Figur 3 und 5 in einer unteren Position befindet und bei der Figur 4 und 6 in einer oberen Position. Dadurch wird das wirkende Schwenkmoment der Federvorrichtung 30 auf den Stellarm 50 über den schwenkbaren Stellhebel 6 verändert.

Bei diesem Ausführungsbeispiel der Figur 3 bis 6 dient die Einstellvorrichtung 20 dazu, die Position eines Angriffpunktes 32 eines Federpaketes 31 der Federvorrichtung 30 an dem schwenkbaren Stellhebel 6 zu verstellen.

Dazu weist die Einstellvorrichtung 20 eine Einstellschraube 7 auf, die einen Grundkörper 8 mit einem daran angeordneten Gewinde aufweist, wobei das wirkende Schwenkmoment der Federvorrichtung 30 auf den Stellarm 50 über die Schraubenmutter 9 einstellbar ist, welche durch eine Drehbewegung der Einstellschraube 7 entlang des Grundkörpers 8 verstellbar gelagert ist.

Erzeugt wird die Drehbewegung der Einstellschraube 7 durch ein Verdrehen eines der beiden Ritzel 1 und 2 abhängig davon, an welcher Möbelkorpusseite der Stellantrieb 100 befestigt ist.

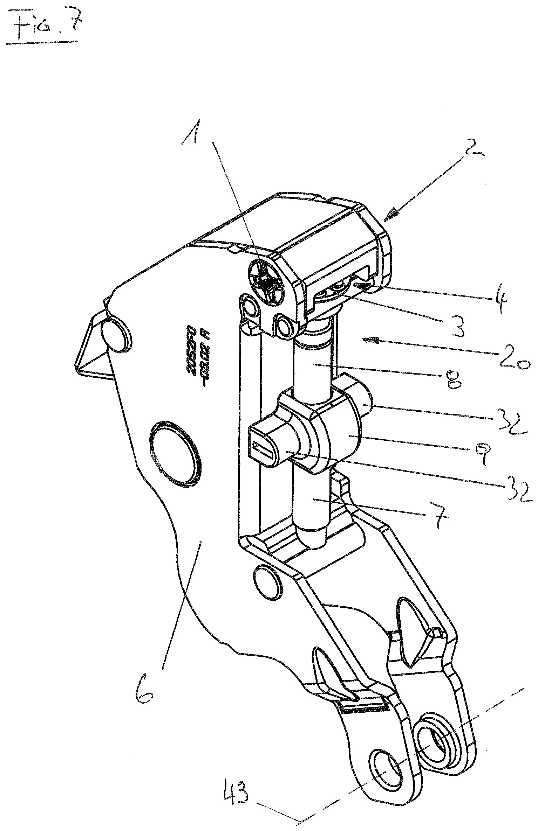

Figur 7 zeigt in perspektivischer Darstellung die Einstellvorrichtung 20, wie sie am Stellhebel 6 montiert ist. Die Einstellvorrichtung 20 weist die Einstellschraube 7 auf. Diese Einstellschraube 7 verfügt wiederum an ihrem Grundkörper 8 über ein Gewinde. Über dieses Gewinde wird die Schraubenmutter 9 verstellt. An der Schraubenmutter 9 wiederum sind die beiden Anlenkpunkte 32 ausgebildet an denen die Federvorrichtung 30 (nicht dargestellt) angreift.

Eine Verdrehung des Stellhebels 6 erfolgt um die Drehachse 43 des Stellhebels 6. Durch ein Verfahren der Schraubenmutter 9 entlang des Grundkörpers 8 der Einstellschraube 7 kommt es zu einer Übersetzungsänderung des Angriffspunktes 32 zur Drehachse 43 des Stellhebels 6.

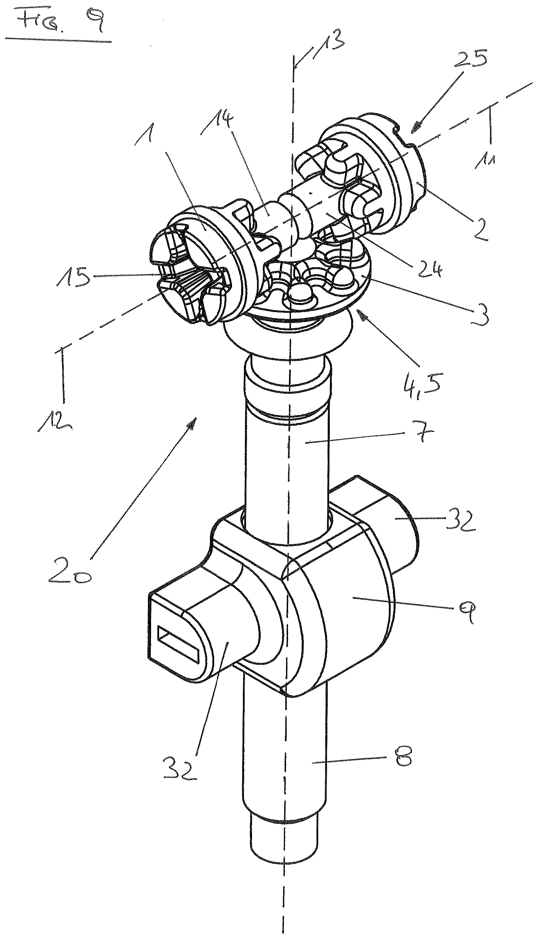

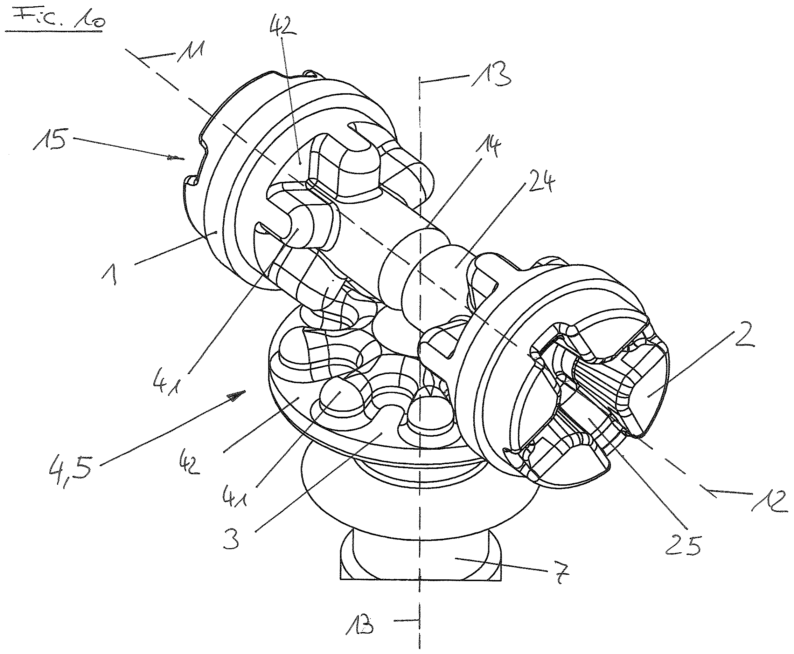

Verstellt wird die Einstellschraube 7 über das Zahnradgetriebe 4 (siehe dazu Figur 9 und Figur 10 und deren Beschreibung).

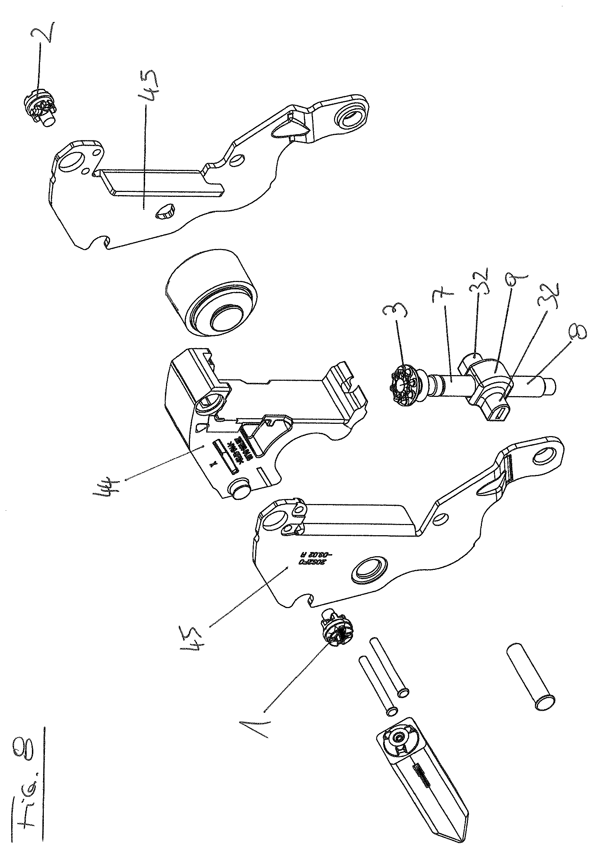

Figur 8 zeigt eine Explosionsdarstellung des Stellhebels 6 der Figur 7. Die wesentlichen Bestandteile des Stellhebels 6 sind hierbei die beiden Ritzel 1 und 2, welche mit dem Tellerrad 3 in Angriff stehen und somit ein Zahnradgetriebe 4 bilden (nicht dargestellt, siehe Figur 9 und 10). Das Tellerrad 3 ist als Schraubenkopf der Einstellschraube 7 ausgebildet. An der Einstellschraube 7 befindet sich die Schraubenmutter 9, mit deren beiden Anlenkpunkte 32 für das hier nicht dargestellte Federpaket 31. Die Schraubenmutter 9 verfährt dabei über ein Gewinde des Grundkörpers 8 der Einstellschraube 7.

Weiters weist der Stellhebel 6 die Stellhebelbasis 44 auf. Links und rechts der Stellhebelbasis 44 sind die beiden Stellhebelhälften 45 und 46 ausgebildet, die die Einstellvorrichtung 20 (siehe Figur 9 und 10) in sich aufnehmen.

Figur 9 zeigt eine perspektivische Darstellung der Einstellvorrichtung 20 zum Einstellen des hier nicht dargestellten Stellantriebes 100. Die Einstellvorrichtung 20 weist ein Zahnradgetriebe 4 mit einem Ritzel 1, einem Ritzel 2 und einem Tellerrad 3 auf, wobei die Tellerradachse 13 in diesem bevorzugten Ausführungsbeispiel einen rechten Winkel zur Ritzelachse 11 einschließt. Beide Ritzel 1 und 2 des Zahnradgetriebes 4 stehen mit demselben Tellerrad 3 in Eingriff.

Der Winkel zwischen der Ritzelachse 11 und der Tellerradachse 13 muss natürlich nicht rechtwinklig sein. Ebenfalls ist es vorstellbar, dass dieser Winkel vom rechten Winkel abweicht. So wäre es in einem anderen Ausführungsbeispiel etwa vorgesehen, dass der Winkel jeden beliebigen Wert zwischen 30° und 150° aufweist.

In diesem bevorzugten Ausführungsbeispiel ist das Zahnradgetriebe 4 als Kegelradgetriebe 5 ausgebildet und beide Ritzel 1 und 2 liegen erfindungsgemäß auf einer gemeinsamen gedachten Drehachse 12, welche hier identisch mit der Ritzelachse 11 ist.

Die beiden Ritzel 1 und 2 weisen jeweils eine kraftübertragende Welle 14 bzw. 24 auf, wobei die beiden Wellen 14 und 24 voneinander beabstandet sind.

Zum Verstellen der beiden Ritzel 1 und 2 weisen diese jeweils eine Werkzeugaufnahme 15 und 25 zum Verdrehen der Ritzel 1 und 2 auf.

In diesem bevorzugten Ausführungsbeispiel sind die beiden Werkzeugaufnahmen 15 und 25 als Kreuzschlitzaufnahmen ausgebildet, ebenso wäre es natürlich auch vorstellbar, dass die Werkzeugaufnahmen 15 und 25 als Schlitz, als Innensechskant oder Innensechsrund oder ähnliches ausgebildet sind.

Verdreht man nun etwa das Ritzel 1 im Uhrzeigersinn um die Ritzelachse 11, so verdreht sich auch das Tellerrad 3 und damit die Einstellschraube 7 im Uhrzeigersinn.

Verdreht man das Ritzel 2 im Uhrzeigersinn, so erfolgt ebenfalls eine Verdrehung des Tellerrades 3 der Einstellschraube 7 im Uhrzeigersinn.

Dies ist der große Vorteil gegenüber dem Stand der Technik. Beim Stand der Technik ist es so, dass abhängig von welcher Seite aus man den Stellantrieb 100 über die Einstellvorrichtung 20 verstellt, man unterschiedliche Drehrichtungen verwenden muss um zu demselben Ergebnis zu kommen. D.h., das Montagepersonal muss bei einem Stellantrieb 100, der an einer rechten Korpusseitenwand montiert ist, eine Betätigungsschraube in die andere Richtung drehen als bei einem Stellantrieb 100, der auf einer linken Korpusseite befestigt ist, um dieselbe Verstellung zu bewirken. D.h. das Montagepersonal muss immer die Montageseite mit berücksichtigen, um zu wissen, in welche Richtung das Betätigungselement verstellt werden muss.

Bei dem hier vorliegenden Stellantrieb 100 ist es nicht so. Sowohl eine Verdrehung von der rechten Seite aus als auch eine Verdrehung von der linken Seite aus führen zu einer gleichen Verstellung der Einstellvorrichtung 20.

Figur 10 zeigt eine Detailaufnahme des Zahnradgetriebes 4, das in diesem bevorzugten Ausführungsbeispiel als Kegelradgetriebe 5 ausgebildet ist.

Die Zähne des Zahnradgetriebes 4 sind hier als abgerundete Noppen 41 ausgebildet und greifen dabei in die korrespondierenden Ausnehmungen 42 ein.

Bei dieser Figur 10 handelt es sich um eine gedrehte Detailansicht der Figur 9. Ansonsten gilt auch hier das bei der Figur 9 Erwähnte.

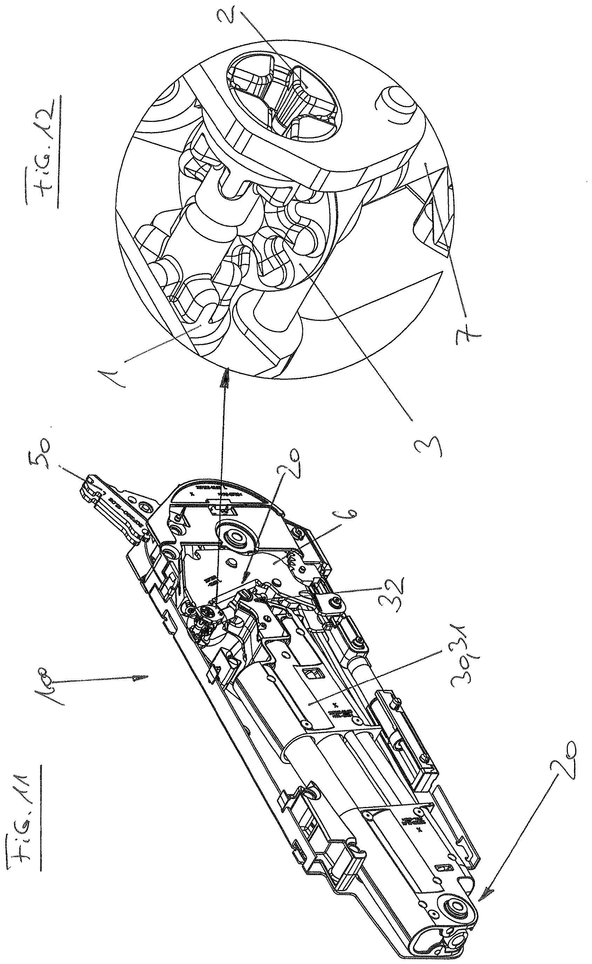

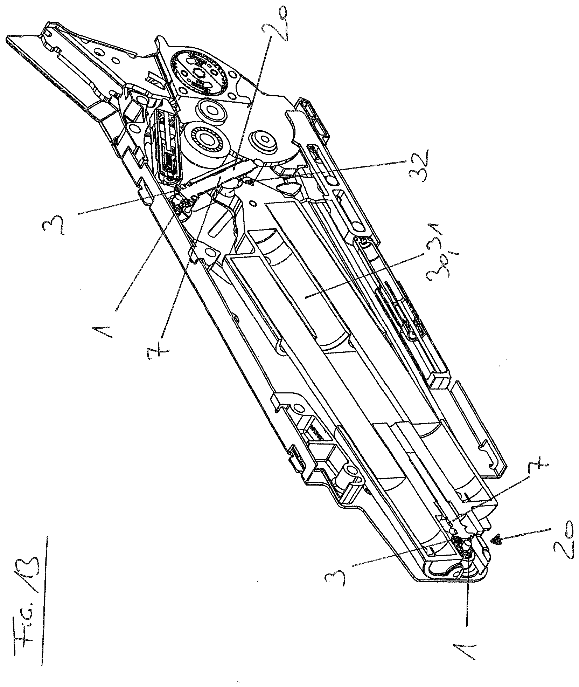

In den Figuren 11 bis 13 ist nun eine Variante eines Stellantriebes 100 dargestellt.

Dieser Stellantrieb 100 weist nicht nur eine Einstellvorrichtung 20 auf, sondern zwei.

Dabei dient eine Einstellvorrichtung 20 dazu, die Position des Angriffspunktes 32 des Federpaketes 31 am schwenkbaren Stellhebel 6 zu verstellen. Eine nicht erfindungsgemäße Einstellvorrichtung dient dazu, die Federvorspannung des Federpaketes 31 der Federvorrichtung 30 zu verstellen.

Beide Einstellvorrichtungen 20 sind im Wesentlichen identisch aufgebaut, das Ein- und Verstellen der Einstellschraube 7 erfolgt wiederum über die beiden Ritzel 1 und 2. Ansonsten gilt das bei dem vorangegangenen Ausführungsbeispiel sinngemäß Erwähnte.

Bei beiden angesprochenen Ausführungsbeispielen ist es bevorzugt vorgesehen, dass das Tellerrad 3 und auch die beiden Ritzel 1 und 2 aus Kunststoff ausgebildet sind. Ebenso könnten diese natürlich auch aus jedem anderen Werkstoff hergestellt werden.

### Bezugszeichenliste:

- 1: erstes Ritzel
- 2: zweites Ritzel
- 3: Tellerrad
- 4: Zahnradgetriebe
- 5: Kugelradgetriebe
- 6: Stellhebel
- 7: Einstellschraube
- 8: Grundkörper der Einstellschraube
- 9: Schraubenmutter
- 11: Ritzelachse
- 12: gemeinsame gedachte Drehachse der Ritzel 1 und 2
- 14: Welle des Ritzels 1
- 15: Werkzeugaufnahme des Ritzels 1
- 20: Einstellvorrichtung
- 24: Welle des Ritzels 2
- 25: Werkzeugaufnahme des Ritzels 2
- 30: Federvorrichtung
- 31: Federpaket der Federvorrichtung 30
- 32: Angriffspunkt des Federpakets 31
- 41: abgerundete Noppen des Zahnradgetriebes 4
- 42: abgerundete Ausnehmungen des Zahnradgetriebes 4
- 43: Drehachse des Stellhebels 6
- 44: Stellhebelbasis
- 45: linke Stellhebelhälfte
- 46: rechte Stellhebelhälfte
- 50: Stellarm
- 60: Gehäuse des Stellantriebs 100
- 61: linke Gehäuseseite des Stellantriebs 100
- 62: rechte Gehäuseseite des Stellantriebs 100
- 100: Stellantrieb
- 101: Möbelklappe
- 102: Möbelkorpus
- 103: linke Korpusseitenwand
- 104: rechte Korpusseitenwand
- 110: Möbel

## Patentansprüche

1. Stellantrieb (100) zum Bewegen einer Klappe (101) eines Möbels (110), mit
- einem schwenkbar gelagerten Stellarm (50) zum Bewegen der Klappe (101),
- einer Federvorrichtung (30) zum Beaufschlagen des Stellarmes (50) mit einem Schwenkmoment in Öffnungsrichtung,
- einer Einstellvorrichtung (20) zum Einstellen des Angriffspunktes zwischen einem Federpaket (31) der Federvorrichtung (30) und einem schwenkbaren Stellhebel (6) des Stellantriebes (100), wobei die Einstellvorrichtung (20) ein Zahnradgetriebe (4) mit einem Ritzel (1) und einem Tellerrad (3) aufweist, wobei das Tellerrad (3) durch den Schraubenkopf einer Einstellschraube (7) der Einstellvorrichtung (20) ausgebildet ist und das Tellerrad (3) mit dem Ritzel (1) in Eingriff steht und dessen Tellerradachse (13) zur Ritzelachse (11) einen - vorzugsweise rechten - Winkel einschließt, wobei die Einstellschraube (7) einen Grundkörper (8) mit einem daran angeordneten Gewinde aufweist und am Gewinde der Einstellschraube (7) eine Schraubenmutter (9) angeordnet ist, welche zum Einstellen des Anlenkpunkts (32) des Federpakets (31) entlang dem Gewinde der Einstellschraube (7) verfahrbar ist, **dadurch gekennzeichnet, dass** das Zahnradgetriebe (4) ein zweites Ritzel (2) aufweist, das mit demselben Tellerrad (3) in Eingriff steht wie das erste Ritzel (1), und dass das zweite Ritzel (2) auf einer gemeinsamen gedachten Drehachse (12) mit dem ersten Ritzel (1) liegt.

2. Stellantrieb nach Anspruch 1, **dadurch gekennzeichnet, dass** das Zahnradgetriebe (4) als Kegelradgetriebe (5) ausgebildet ist.

3. Stellantrieb nach einem der Ansprüche 1 oder 2, **dadurch gekennzeichnet, dass** die beiden Ritzel (1, 2) jeweils eine Kraft übertragende Welle (14, 24) aufweisen, wobei die beiden Wellen (14, 24) voneinander beabstandet sind.

4. Stellantrieb nach einem der Ansprüche 1 bis 3, **dadurch gekennzeichnet, dass** die beiden Ritzel (1, 2) jeweils eine Werkzeugaufnahme (15, 25) zum Verdrehen der Ritzel (1, 2) aufweisen.

5. Stellantrieb nach Anspruch 4, **dadurch gekennzeichnet, dass** die Werkzeugaufnahmen (15, 25) als Schlitz oder Kreuzschlitz oder Innensechskant oder Innensechsrund ausgebildet sind.

6. Stellantrieb nach einem der Ansprüche 1 bis 5, **dadurch gekennzeichnet, dass** die Zähne des Zahnradgetriebes (4) als abgerundete Noppen (41) ausgebildet sind die in - vorzugsweise abgerundete - Ausnehmungen (42) eingreifen.

7. Stellantrieb nach einem der Ansprüche 1 bis 6, **dadurch gekennzeichnet, dass** das Tellerrad (3) und/oder die Ritzel (1, 2) aus Kunststoff ausgebildet sind.

8. Stellantrieb nach einem der Ansprüche 1 bis 7, **dadurch gekennzeichnet, dass** der Stellantrieb (100) ein Gehäuse (60) mit einer im Wesentlichen ebenen linken Gehäuseseite (61) und einer im Wesentlichen ebenen rechten Gehäuseseite (62) aufweist, wobei
- das erste Ritzel (1) von der linken Gehäuseseite (61) her zugänglich ist und
- das zweite Ritzel (2) von der rechten Gehäuseseite (62) her zugänglich ist und
- ein Verdrehen des ersten und zweiten Ritzels (1, 2) von außen im selben Drehsinn dieselbe Verstellung des Stellantriebs (100) bewirkt.

9. Stellantrieb nach einem der Ansprüche 1 bis 8, **dadurch gekennzeichnet, dass** das wirkende Schwenkmoment der Federvorrichtung (20) auf den Stellarm (50) über die Schraubenmutter (9) einstellbar ist, welche durch eine Drehbewegung der Einstellschraube (7) entlang des Grundkörpers (8) verstellbar gelagert ist.

10. Möbel (110) mit einer Klappe (101) und zwei Stellantrieben (100) nach einem der Ansprüche 1 bis 9.

## Claims

1. An actuator drive (100) for moving a flap (101) of an article of furniture (110), comprising
- a pivotably mounted actuator arm (50) for moving the flap (101),
- a spring device (30) for acting on the actuator arm (50) with a pivotal moment in the opening direction, and
- an adjusting device (20) for adjusting the engagement point (32) between a spring pack (31) of the spring device (30) and a pivotable actuator lever (6) of the the actuator drive (100), wherein the adjusting device (20) has a gear transmission (4) having a pinion (1) and a crown gear (3), wherein the crown gear (3) is in the form of a screw head of a adjusting screw (7) of the adjusting device (20) and the crown gear (3) and the crown gear (3) is in engagement with the first pinion (1) and the crown gear axis (13) of which includes a - preferably right - angle relative to the pinion axis (11), wherein the adjusting screw (7) having a main body (8) with a thread thereon and a screw nut (9) is mounted displaceably along the thread of the adjusting screw (7) for adjusting the spring packs (31) engagement point (32),
**characterised in that** the gear transmission (4) has a second pinion (2) which is in engagement with the same crown gear (3) as the first pinion (1) and the second pinion (2) is on a common notional axis of rotation (12) with the first pinion (1).

2. An actuator drive as set forth in claim 1 **characterised in that** the gear transmission (4) is in the form of a bevel gear transmission (5).

3. An actuator drive as set forth in one of claims 1 or 2 **characterised in that** the two pinions (1, 2) each have a force-transmitting shaft (14, 24), the two shafts (14, 24) being spaced from each other.

4. An actuator drive as set forth in one of claims 1 through 3 **characterised in that** the two pinions (1, 2) each have a respective tool receiving means (15, 25) for rotating the pinions (1, 2).

5. An actuator drive as set forth in claim 4 **characterised in that** the tool receiving means (15, 25) are in the form of a slot or a cross slot or a hexagonal socket or a hexalobular socket.

6. An actuator drive as set forth in one of claims 1 through 5 **characterised in that** the teeth of the gear transmission (4) are in the form of rounded knobs (41) which engage into - preferably rounded - recesses (42).

7. An actuator drive as set forth in one of claims 1 through 6 **characterised in that** the crown gear (3) and/or the pinions (1, 2) are of plastic.

8. An actuator drive as set forth in one of claims 1 through 7 **characterised in that** the actuator drive (100) has a housing (60) with a substantially flat left housing side (61) and a substantially flat right housing side (62), wherein
- the first pinion (1) is accessible from the left housing side (61), and
- the second pinion (2) is accessible from the right housing side (62), and
- rotation of the first and second pinions (1, 2) from the exterior in the same direction of rotation produces the same displacement of the actuator drive (100).

9. An actuator drive as set forth in one of claims 1 through 8 **characterised in that** the operative pivotal moment of the spring device (20) acting on the actuator arm (50) is adjustable by way of the screw nut (9) mounted displaceably along the main body (8) by a rotary movement of the adjusting screw (7).

10. An article of furniture (110) comprising a flap (101) and two actuator drives (100) as set forth in one of claims 1 through 9.

## Revendications

1. Actionneur (100) pour déplacer un abattant (101) d'un meuble (110), avec
- un bras de réglage logé de façon pivotante (50) pour déplacer l'abattant (101),
- un dispositif à ressort (30) pour solliciter le bras de réglage (50) avec un couple de pivotement dans le sens d'ouverture,
- un dispositif de réglage (20) pour régler le point d'application entre un bloc-ressort (31) du dispositif à ressort (30) et un levier de réglage pivotant (6) de l'actionneur (100), dans lequel le dispositif de réglage (20) présente une transmission par engrenages (4) avec un pignon (1) et une couronne de différentiel (3), dans lequel la couronne de différentiel (3) est formée par la tête de vis d'une vis de réglage (7) du dispositif de réglage (20) et la couronne de différentiel (3) est en prise avec le pignon (1) et son axe de couronne de différentiel (13) forme un angle - de préférence droit - par rapport à l'axe de pignon (11), dans lequel la vis de réglage (7) présente un corps de base (8) avec un filetage disposé dessus et sur le filetage de la vis de réglage (7) est disposé un écrou (9), lequel est déplaçable le long du filetage de la vis de réglage (7) pour régler le point d'articulation (32) du bloc-ressort (31),
**caractérisé en ce que** la transmission par engrenages (4) présente un deuxième pignon (2) qui est en prise avec la même couronne de différentiel (3) comme le premier pignon (1), et **en ce que** le deuxième pignon (2) se trouve sur un axe de rotation conçu commun (12) avec le premier pignon (1).

2. Actionneur selon la revendication 1, **caractérisé en ce que** la transmission par engrenages (4) est conçue comme un engrenage conique (5).

3. Actionneur selon l'une des revendications 1 ou 2, **caractérisé en ce que** les deux pignons (1, 2) présentent à chaque fois un arbre (14, 24) transmettant une force, dans lequel les deux arbres (14, 24) sont à une certaine distance l'un de l'autre.

4. Actionneur selon l'une des revendications 1 à 3, **caractérisé en ce que** les deux pignons (1, 2) présentent à chaque fois un logement d'outil (15, 25) pour la torsion des pignons (1, 2).

5. Actionneur selon la revendication 4, **caractérisé en ce que** les logements d'outil (15, 25) sont conçus comme une fente ou une fente cruciforme ou un six pans creux ou une douille hexagonale.

6. Actionneur selon l'une des revendications 1 à 5, **caractérisé en ce que** les dents de la transmission par engrenages (4) sont conçues comme des goujons arrondis (41) qui engrènent dans des évidements (42) - de préférence arrondis -.

7. Actionneur selon l'une des revendications 1 à 6, **caractérisé en ce que** la couronne de différentiel (3) et / ou les pignons (1, 2) sont formés en matière synthétique.

8. Actionneur selon l'une des revendications 1 à 7, **caractérisé en ce que** l'actionneur (100) présente un carter (60) avec un côté de carter gauche (61) essentiellement plan et un côté de carter droit (62) essentiellement plan, dans lequel
- le premier pignon (1) est accessible depuis le côté de carter gauche (61) et
- le deuxième pignon (2) est accessible depuis le côté de carter droit (62) et
- une torsion du premier et du deuxième pignon (1, 2) de l'extérieur dans le même sens de rotation réalise le même déplacement de l'actionneur (100).

9. Actionneur selon l'une des revendications 1 à 8, **caractérisé en ce que** le couple de pivotement opérant du dispositif à ressort (20) est réglable sur le bras de réglage (50) au moyen de l'écrou (9), lequel est logé de façon déplaçable par un mouvement de rotation de la vis de réglage (7) le long du corps de base (8).

10. Meuble (110) avec un abattant (101) et deux actionneurs (100) selon l'une des revendications 1 à 9.
